# EUROPEAN PATENT SPECIFICATION

(11) **EP 2 950 191 B1**
(45) Date of publication and mention of the grant of the patent: **30.01.2019**
(21) Application number: 15169399.1
(22) Date of filing: 27.05.2015
(51) Int. Cl.: G06F 3/044

(54) **TOUCH SCREEN CONTROL METHOD AND DEVICE**
BERÜHRUNGSBILDSCHIRMSTEUERUNGSVERFAHREN UND -VORRICHTUNG
PROCÉDÉ ET DISPOSITIF DE COMMANDE D'ÉCRAN TACTILE

(30) Priority: 30.05.2014 CN 201410238770
(43) Date of publication of application: 02.12.2015
(73) Proprietor: Xiaomi Inc., Beijing 100085 (CN)
(72) Inventor: Yang, Kun, Beijing 100085 (CN); Zhang, Bo, Beijing 100085 (CN); Xiao, Xiang, Beijing 100085 (CN)
(74) Representative: Underwood, Nicolas Patrick

(56) References cited:
- CN-A- 102 968 235
- US-A1- 2012 075 245
- US-A1- 2013 038 573
- US-A1- 2013 176 268

## Description

### TECHNICAL FIELD

The present invention generally relates to the field of screen touch technology, and more particularly, to a touch screen control method and device.

### BACKGROUND

With the rapid development of screen touch technology, electronic equipment using a touch screen has been widely used. A touch screen is usually classified as a pressure sensing touch screen, a resistive touch screen, a capacitive touch screen, an infrared touch screen, a surface acoustic wave touch screen and the like; wherein, the capacitive touch screen is undoubtedly the most widely used touch screen.

A capacitive touch screen includes transversal and longitudinal electrode arrays made from ITO (Indium Tin Oxide). The transversal and longitudinal electrode arrays constitute a plurality of test points equally distributed on the screen surface. As self-capacitance can be produced between adjacent electrodes, single-point touch detection can be realized by collecting the change of self-capacitance values of test points by way of self-capacitance scanning. In addition, as mutual capacitance can be produced between adjacent electrodes, multi-point touch detection can be realized by collecting the change of mutual capacitance values of test points by way of mutual capacitance scanning.

In the process of realization of the present invention, it has been found that the aforementioned modes have at least the following disadvantages: common electrically conductive mediums or liquids (for example, water, oil, milk and the like) covering the surface of a capacitive touch screen seriously impact the sensitivity and detection precision of the capacitive touch screen. Taking water as an example, change in capacitance produced by users' finger touch on the capacitive touch screen surface covered with water will be interfered by water, specifically embodied as no response to touch operation, error response, or single-finger operation identified as multi-finger operation, etc. Known touch screen control methods are disclosed in documents US 2013/038573 A1, CN 102 968 235 A, US 2013/176268 A1, and US 2012/075245 A1.

US 2013/038573 A1 discloses a full screen driven detection. A driving signal is simultaneously provided to all first conductive strips arranged in parallel in a first direction in a touch screen, and mutual capacitive signals are detected from all second conductive strips arranged in parallel in a second direction. The mutual capacitive signals can be used for determining whether an external conductive object coupled to the ground is touching or approaching the touch screen or not even if water or other conductive object not coupled to ground is on the touch screen. Thus, the baseline of the mutual capacitive signals can be updated if the touch screen is not touched or approached by any external conductive object coupled to ground over a predetermined period of time.

Document CN 102 968 235 A relates to a touch technology field, provides a touch detecting method for a touch sensor, the method comprises the following steps: putting the touch sensor into a mutual capacitance mode and a self capacitance mode alternatively, and scanning and detecting the rows and columns of a capacitance array of the touch sensor; when a touch state is preliminarily judged as a multi-touch according to a scanning and detecting result in the mutual capacitance mode, implementing envelopment analysis for data obtained by sampling in the self capacitance mode, determining whether the touch state in the mutual capacitance mode is a single touch or the multi-touch, outputting one touch coordinate if the touch state is the single touch; and outputting a plurality of touch coordinates if the touch state is the multi-touch. The invention in this prior-art document also provides a touch detecting system and a touch terminal for the touch sensor and improves the accuracy of a touch detection result of the touch sensor, particularly the accuracy of the detection result for distinguishing whether the touch is the single touch or the multi-touch in the case that the touch control terminal is subjected to a large area touch in a floating state.

In US 2013/176268 A1, a method for a touch panel control circuit includes stimulating a touch panel and receiving signals responsive to the stimulating. Based on the received signals, water or another contaminant may be determined to be present on the touch panel. While the contaminant is present on the touch panel, a wet baseline mode of operation in which a different baseline value is used to detect a touch condition for the touch panel. When the contaminant is removed, operation returns to a dry baseline mode.

In US 2012/075245 A1, a method and device for capacitive position detection are disclosed. The touch related sensors within a sensing device with a plurality of sensors are detected first. Therefore at least a range of the mutual capacitance detection for detecting sensing information can be determined according to the touch related sensors. The sensing information within the range of the mutual capacitance detection can be used for generating a two-dimension sensing information.

### SUMMARY

In order to solve the problem of electrically conductive mediums covering the surface of capacitive touch screens seriously impacting the sensitivity and detection precision of capacitive touch screens, the embodiments of the invention provide a touch screen control method and device. The technical solution is provided by the invention as defined in the independent claims. Embodiments are solely defined by the dependent claims, any reference to the word "embodiment" hereinafter notwithstanding.

In a particular embodiment, identifying the interference level of the electrically conductive medium according to change of the actual capacitance value relative to the reference capacitance value includes:
detecting whether each of the test points meets a predetermined condition; the predetermined condition includes: the actual self-capacitance value of the test point is the same as the reference self-capacitance value, and the actual mutual capacitance value of the test point is different from the reference mutual capacitance value; wherein, the reference self-capacitance value refers to the self-capacitance value when the test point is not influenced by electrically conductive medium, and the reference mutual capacitance value refers to the mutual capacitance value when the test point is not influenced by electrically conductive medium;
identifying the test point surface is covered with the electrically conductive medium if the test point meets the predetermined condition, and according to the difference value between the actual mutual capacitance value and the reference mutual capacitance value, identifying the coverage quantity of the electrically conductive medium, the difference value being in a positive correlation relationship with the coverage quantity;
identifying the actual coverage scope and coverage quantity of the electrically conductive medium on the touch screen surface according to the fact whether the surface of each test point is covered with the electrically conductive medium and to the coverage quantity of the electrically conductive medium,; and
identifying the interference level of the electrically conductive medium according to the actual coverage scope and coverage quantity of the electrically conductive medium on the touch screen surface,.

It should be noted that the surface of each test point corresponds to an area around a test point.

In a particular embodiment, the electrically conductive medium is an electrically conductive medium, controlling the touch screen under the operation mode corresponding to the interference level, includes:
selecting from the predetermined correspondence relation the operation mode corresponding to the interference level, the predetermined correspondence relation includes the correspondence relation between interference levels and operation modes, and the operation modes include at least one of a full-screen multi-finger operation mode, a multi-finger and single-finger mixed operation mode, a full-screen single-finger operation mode and a full-screen shut-down operation mode; and
controlling the touch screen under the operation mode selected.

In a particular embodiment, the interference level includes a first interference level, a second interference level, a third interference level and a fourth interference level with increasing interference degree, and selecting from the predetermined correspondence relation the operation mode corresponding to the interference level, includes:
selecting from the predetermined correspondence relation the full-screen multi-finger operation mode if the interference level of the electrically conductive medium is the first interference level; or,
selecting from the predetermined correspondence relation the multi-finger and single-finger mixed operation mode if the interference level of the electrically conductive medium is the second interference level; or,
selecting from the predetermined correspondence relation the full-screen single-finger operation mode if the interference level of the electrically conductive medium is the third interference level; or,
selecting from the predetermined correspondence relation the full-screen shut-down operation mode if the interference level of the electrically conductive medium is the fourth interference level.

In a particular embodiment, the method also includes:
controlling the touch screen under the multi-finger operation mode when the touch screen is under the multi-finger and single-finger mixed operation;
acquiring the touch position corresponding to at least one finger by way of mutual capacitance scanning;
detecting whether any touch position enters within the scope of the electrically conductive medium, the scope of the electrically conductive medium is determined according to the actual coverage scope of the electrically conductive medium on the touch screen surface, and the area of the scope of the electrically conductive medium is larger than that of the actual coverage scope;
controlling the touch screen for switching from the multi-finger operation mode to the single-finger operation mode if any touch position enters within the scope of the electrically conductive medium; and
continuing acquiring at least one associated touch position corresponding to the touch position entering into the scope of the electrically conductive medium by way of self-capacitance scanning.

In a particular embodiment, the method also includes:
reporting the current operation mode of the touch screen to CPU of electronic equipment, the CPU is used for generating prompt message which is used for prompting the current operation mode of the touch screen.

According to the second aspect of the embodiment in the invention, a touch screen control device is provided, the device includes:
a capacitance acquisition module, configured for acquiring actual capacitance values of test points on the touch screen;
a level identification module, configured for identifying an interference level of an electrically conductive medium according to a change of the actual capacitance value relative to a reference capacitance value, the reference capacitance value referring to the capacitance value when the test point is not influenced by electrically conductive medium; and
a mode control module, configured for controlling the touch screen under the operation mode corresponding to the interference level.

In a particular embodiment, the level identification module includes: a condition detection module, a coverage identification module, a scope identification module and a level identification module;
the condition detection module is configured for detecting whether each of the test points meets a predetermined condition; the predetermined condition includes: the actual self-capacitance value of the test point is the same as the reference self-capacitance value, and the actual mutual capacitance value of the test point is different from the reference mutual capacitance value; wherein, the reference self-capacitance value refers to the self-capacitance value when the test point is not influenced by electrically conductive liquid, and the reference mutual capacitance value refers to the mutual capacitance value when the test point is not influenced by electrically conductive medium;
the coverage identification module is configured for identifying the test point surface is covered with electrically conductive medium if the test point meets the predetermined condition, and identifying the coverage quantity of the electrically conductive medium, the difference value being in positive correlation relationship with the coverage quantity according to the difference value between the actual mutual capacitance value and the reference mutual capacitance value;
the scope identification module is configured for identifying the actual coverage scope and coverage quantity of the electrically conductive medium on the touch screen surface according to the fact whether the surface of each test point is covered with the electrically conductive medium and to the coverage quantity of the electrically conductive medium;
the level identification module is configured for identifying the interference level of the electrically conductive medium according to the actual coverage scope and coverage quantity of the electrically conductive medium on the touch screen surface.

In a particular embodiment, the mode control module includes a mode selection module and a mode control module;
the mode selection module is configured for selecting from the predetermined correspondence relation the operation mode corresponding to the interference level, the predetermined correspondence relation includes the correspondence relation between interference levels and operation modes, and the operation modes include at least one of a full-screen multi-finger operation mode, a multi-finger and single-finger mixed operation mode, a full-screen single-finger operation mode and a full-screen shut-down operation mode.
the mode control module is configured for controlling the touch screen under the operation mode selected.

In a particular embodiment, the mode selection module includes: a first selection subunit; or, a second selection subunit; or a third selection subunit; or, a fourth selection subunit;
the interference level including a first interference level, a second interference level, a third interference level and a fourth interference level with increasing interference degree,
the first selection submodule is configured for selecting from the predetermined correspondence relation the full-screen multi-finger operation mode if the interference level of the electrically conductive medium is the first interference level;
the second selection submodule is configured for selecting from the predetermined correspondence relation the multi-finger and single-finger mixed operation mode if the interference level of the electrically conductive medium is the second interference level;
the third selection submodule is configured for selecting from the predetermined correspondence relation the full-screen single-finger operation mode if the interference level of the electrically conductive medium is the third interference level;
the fourth selection submodule is configured for selecting from the predetermined correspondence relation the full-screen shut-down operation mode if the interference level of the electrically conductive medium is the fourth interference level.

In a particular embodiment, the device also includes:
a multi-finger control module, configured for controlling the touch screen under the multi-finger operation mode when the touch screen is under the multi-finger and single-finger mixed operation mode;
a position acquisition module, configured for acquiring the touch position corresponding to at least one finger by way of mutual capacitance scanning;
a position detection module, configured for detecting whether any touch position enters within the scope of the electrically conductive medium, the scope of the electrically conductive medium is determined according to the actual coverage scope of the electrically conductive medium on the touch screen surface, and the area of the scope of the electrically conductive medium is larger than that of the actual coverage scope;
a mode switching module, configured for controlling the touch screen for switching from the multi-finger operation mode to the single-finger operation mode if any touch position enters within the scope of the electrically conductive medium;
a position tracking module, configured for continuing acquiring at least one associated touch position corresponding to the touch position entering into the scope of the electrically conductive medium by way of self-capacitance scanning.

In a particular embodiment, the device also includes:
a mode report module, configured for reporting the current operation mode of the touch screen to CPU of electronic equipment, the CPU is used for generating a prompt message which is used for prompting the current operation mode of the touch screen.

According to the third aspect of the embodiment in the invention, a touch screen control device is provided, including:
a processor;
a memory used for storing executable instructions from the processor;
wherein, the processor is configured for:
acquiring actual capacitance values of test points on the touch screen;
identifying the interference level of an electrically conductive medium according to a change of the actual capacitance values relative to reference capacitance values, the reference capacitance values referring to the capacitance values when the test points are not influenced by electrically conductive medium; and
controlling the touch screen under the operation mode corresponding to the interference level.

According to a fourth aspect of the embodiment of the invention, a computer program is also provided

The computer program includes instructions for executing the steps of a method as defined above when said program is executed on a processor.

This program can use any programming language and take the form of source code, object code or a code intermediate between source code and object code, such as a partially compiled form, or any other desirable form.

According to a fifth aspect of embodiment of the invention, a recording medium readable by a computer is also provided.

The recording medium has recorded thereon a computer program including instructions for executing the steps of a method as defined above.

The recording medium can be any entity or device capable of storing the program. For example, the recording medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The technical solution according to the embodiment of the invention may have the following beneficial effects:

Identifying the interference level of the electrically conductive medium by acquiring actual capacitance values of test points on the touch screen according to change of the actual capacitance values relative to the reference capacitance values, and controlling the touch screen under the operation mode corresponding to the interference level may solve the problems of electrically conductive mediums covering the capacitive touch screen surface seriously impacting the sensitivity and detection precision of the capacitive touch screen. Controling the touch screen under the operation mode corresponding to the interference level according to the interference level of the electrically conductive mediums may, to a large extent, mitigate the effect of electrically conductive mediums on a touch screen, thereby improving the sensitivity and detection precision of the touch screen.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a touch screen control method according to an exemplary embodiment;
Fig. 2 is a flow chart showing a touch screen control method according to another exemplary embodiment;
Fig. 3 is a block diagram of a touch screen control device according to an exemplary embodiment;
Fig. 4 is a block diagram of a touch screen control device according to another exemplary embodiment;
Fig. 5 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Electrically conductive mediums include fingers, electrically conductive liquids and/or any other conducting materials causing change of capacitance values of the touch screen.

The embodiments described thereafter are directed to electrically conductive liquids.

In the process of realization of the invention, it has been found out that: when a small amount of electrically conductive liquid represented by water is covering a touch screen surface, change of the self-capacitance value triggered by finger touch can be stably monitored by Touch IC (touch chip); change of the mutual capacitance value triggered by finger touch is difficult to be stably monitored by Touch IC because it is greatly influenced by the electrically conductive liquid. Therefore, when the touch screen surface is covered with the electrically conductive liquid or when user's fingers touch the electrically conductive liquid, the touch screen can be controlled under such a mode in which only change of the self-capacitance value can be monitored so as to guarantee the single-point touch detection, which can, to some extent, reduce the impact of the electrically conductive liquid on the sensitivity and detection precision of the touch screen, and also conduct a normal detection of single-finger operation such as clicking, sliding and the like. Introduction and description will be made as below in detail to the technical scheme according to the present invention by way of embodiments.

Firstly, it should be stated that, in embodiments of the invention, the electronic equipment involved can be a mobile phone, a tablet computer, an ebook reader, a MP3 (Moving Picture Experts Group Audio Layer III) player, a MP4 (Moving Picture Experts Group Audio Layer IV) player, a laptop portable computer, a desktop computer, a smart television and the like. The electronic equipment includes a touch screen, the touch screen is a capacitive touch screen, and the capacitive touch screen supports both self-capacitance scanning and mutual capacitance scanning.

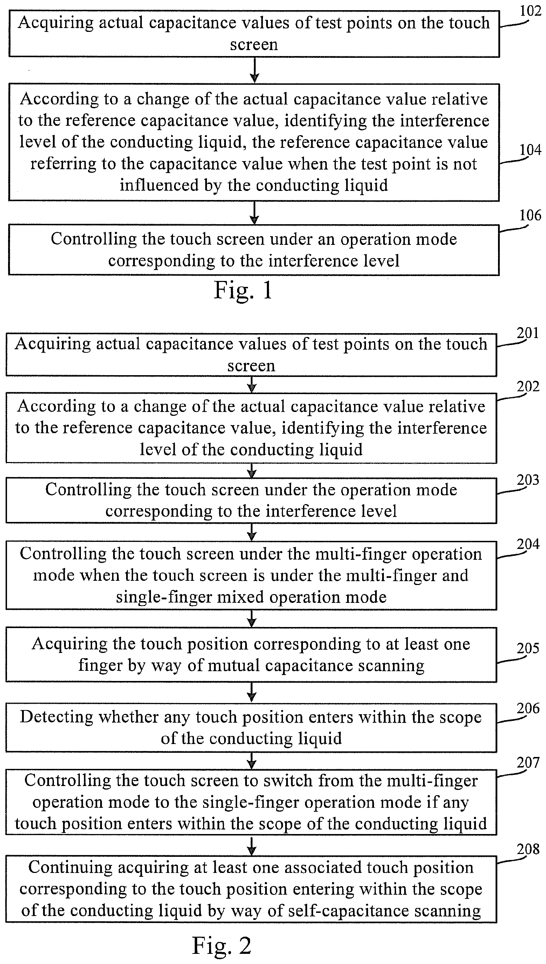

Fig. 1 is a flow chart showing a touch screen control method according to an exemplary embodiment which is illustrated by application of the touch screen control method into electronic equipment. The touch screen control method includes following steps:

In Step 102, it is acquired actual capacitance values of respective test points on the touch screen.

In Step 104, according to change of the actual capacitance values relative to reference capacitance values, it is identified an interference level of an electrically conductive liquid, the reference capacitance values referring to capacitance values when the test points are not influenced by electrically conductive medium.

In Step 106, the touch screen is controlled under an operation mode corresponding to the interference level.

In conclusion, the touch screen control method according to the embodiment is characterized by: according to change of the actual capacitance value relative to the reference capacitance value, identifying the interference level of the electrically conductive liquid by acquiring actual capacitance values of test points on the touch screen, and controlling the touch screen under the operation mode corresponding to the interference level, thus solving the problem of electrically conductive liquids covering on the capacitive touch screen surface seriously impacting the sensitivity and detection precision of the capacitive touch screen, and controlling the touch screen under the operation mode corresponding to the interference level according to the interference level of the electrically conductive liquids, to a large extent mitigating the impact of electrically conductive liquids on the touch screen, and improving the sensitivity and detection precision of the touch screen.

Fig. 2 is a flow chart showing a touch screen control method according to another exemplary embodiment which is illustrated by application of the touch screen control method into electronic equipment. The touch screen control method includes following steps:

In Step 201, actual capacitance values of respective test points on the touch screen are acquired.

Both actual self-capacitance values and actual mutual capacitance values of test points on the touch screen are acquired by Touch IC respectively by self-capacitance scanning and mutual capacitance scanning.

In Step 202, according to a change of the actual capacitance value relative to reference capacitance values, the interference level of the electrically conductive liquid is identified.

The reference capacitance values also correspondingly include reference self-capacitance values and reference mutual capacitance values when the actual capacitance values include the actual self-capacitance value and the actual mutual capacitance value. Wherein, as to a certain test point, the reference self-capacitance value of the test point refers to the self-capacitance value when the test point is not influenced by electrically conductive medium, and the reference mutual capacitance value of the test point refers to the mutual capacitance value when the test point is not influenced by electrically conductive medium.

As to any test point in the touch screen, Touch IC can identify whether the test point surface is covered with electrically conductive liquid according to the fact whether the self-capacitance value and the mutual capacitance value of the test point are varied, and further, identify the coverage quantity of the electrically conductive liquid on the test point surface according to the amplitude of variation. And based on this, Touch IC can identify the actual coverage scope and coverage quantity of the electrically conductive liquid on the whole touch screen surface, and identify the interference level of the electrically conductive liquid according to the actual coverage scope and coverage quantity.

In a possible implementation, the step may include following substeps.

Firstly, it is detected whether each test point meets the predetermined condition.

Wherein, the predetermined condition includes: the actual self-capacitance value of the test point is the same as the reference self-capacitance value, and the actual mutual capacitance value of the test point is different from the reference mutual capacitance value.

No obvious change of the self-capacitance value of the test point can be detected by using self-capacitance scanning when the test point surface is covered with electrically conductive liquid, i.e., the actual self-capacitance value is very close to or even the same as the reference self-capacitance value. That obvious change of the mutual capacitance value of the test point can be detected by using mutual capacitance scanning when the test point surface is covered with electrically conductive liquid, i.e., the actual mutual capacitance value is greatly different from the reference mutual capacitance value. Taking advantage of this characteristic, Touch IC can, on the basis of change of the self-capacitance value and the mutual capacitance value of a test point, identify whether the test point surface is covered with electrically conductive liquid.

It shall be stated that Touch IC is unable to identify whether the change is caused by the electrically conductive liquid covered or by finger touch only via the method in which change of the mutual capacitance value of the test point is detected by mutual capacitance scanning. Besides, no obvious change of the self-capacitance value of the test point can be detected because the test point surface is covered with the electrically conductive liquid, but obvious change of the self-capacitance value of the test point can be caused by finger touch. Therefore, it can be accurately identified whether the test point surface is covered with electrically conductive liquid in combination of change in the self-capacitance value and in the mutual capacitance value.

Secondly, the test point surface is covered with electrically conductive liquid is identified if the test point meets the predetermined condition, and according to the difference value between the actual mutual capacitance value and the reference mutual capacitance value, the coverage quantity of the electrically conductive liquid is identified.

Touch IC identifies that the test point surface is covered with electrically conductive liquid if the test point meets the predetermined condition, and according to the amplitude of variation of the mutual capacitance value, further identifies the coverage quantity of electrically conductive liquid. Wherein, the difference value between the actual mutual capacitance value and the reference mutual capacitance value is in a positive correlation relationship with the coverage quantity of electrically conductive liquid. Namely, the larger the amplitude of variation of the mutual capacitance value, the more the coverage quantity of electrically conductive liquid is; the smaller the amplitude of variation of the mutual capacitance value, the less the coverage quantity of electrically conductive liquid is.

In addition, it can be identified that the test point surface is not covered with electrically conductive liquid if the test point doesn't meet the predetermined condition.

Thirdly, according to the fact whether the surface of each test point is covered with the electrically conductive liquid and to the coverage quantity of the electrically conductive liquid, the actual coverage scope and coverage quantity of the electrically conductive liquid on the touch screen surface are identified.

After identifying whether the surface of each test point is covered with the electrically conductive liquid and acquiring the coverage quantity of the electrically conductive liquid, Touch IC integrates the aforementioned information so as to determine the actual coverage scope and coverage quantity of the electrically conductive liquid on the whole touch screen surface.

Fourthly, according to the actual coverage scope and coverage quantity of the electrically conductive liquid on the touch screen surface, identifying the interference level of the electrically conductive liquid.

In the present embodiment, it is assumed that a first interference level, a second interference level, a third interference level and a fourth interference level with increasing interference degree are preset. Those skilled in the art can preset for interference levels respective numerical interval corresponding to the actual coverage scope and numerical interval corresponding to the coverage quantity. Touch IC can, after acquiring the actual coverage scope and coverage quantity of the electrically conductive liquid on the touch screen surface, identify the corresponding numerical interval, and acquire by inquiry the corresponding interference level.

In a possible implementation, water is taken as an example of electrically conductive liquid.
1. In case that no water or thin water mist is on the touch screen surface, Touch IC can identify the interference level of water as the first interference level. Wherein, water mist consists of a plurality of indiscernible water drops. For example, the interference level of water can be identified as the first interference level if the actual coverage scope of water on the touch screen surface is relatively large but the coverage quantity is less than a first threshold value. In an exemplary embodiment, the first threshold value can be set between 0.25ml and 0.5ml.
2. In case that there are water drops on the touch screen surface, Touch IC can identify the interference level of water as the second interference level. For example, the interference level of water can be identified as the second interference level if the actual coverage scope of water on the touch screen surface is relatively small but the coverage quantity reaches the first threshold value.
3. In case that thick water mist is on the touch screen surface, Touch IC can identify the interference level of water as the third interference level. For example, the interference level of water can be identified as the third interference level if the actual coverage scope of water on the touch screen surface is relatively large and the coverage quantity reaches the second threshold value. Wherein, the second threshold value is not less than the first threshold value.
4. In case that large water drops or water film is on the touch screen surface, Touch IC can identify the interference level of water as the fourth interference level. Wherein, the water film refers to a continuous and uninterrupted water layer. For example, the interference level of water can be identified as the fourth interference level if the actual coverage scope of water on the touch screen surface is relatively large and the coverage quantity reaches a third threshold value. Wherein, the third threshold value is greater than the second threshold value.

It should be explained that, the number of interference levels can be set according to the actual situation and in the embodiment only four interference levels are set for illustration, to which the embodiment of the invention makes no restriction.

It should be also explained that, as touch screens of different electronic equipment have different sizes, the numerical interval corresponding to the actual coverage scope and the numerical interval corresponding to the coverage quantity are different in different interference levels. In an actual application, the above numerical intervals can be set on the basis of sizes of touch screens of electronic equipment and in combination with several experiments, to which the embodiment of the invention makes no restriction.

In Step 203, the touch screen is controlled under the operation mode corresponding to the interference level.

The step may include following substeps:

Firstly, the operation mode corresponding to the interference level is selected from the predetermined correspondence relation.

The predetermined correspondence relation includes the correspondence relation between interference levels and operation modes, and the operation modes include at least one of a full-screen multi-finger operation mode, a multi-finger and single-finger mixed operation mode, a full-screen single-finger operation mode and a full-screen shut-down operation mode.

Wherein, the full-screen multi-finger operation mode means that the whole touch screen supports multi-finger touch; the multi-finger and single-finger mixed operation mode means that the touch screen beyond the scope of electrically conductive liquid supports multi-finger touch while the touch screen within the scope of electrically conductive liquid supports single-finger touch; the full-screen single-finger operation mode means that the whole touch screen only supports single-finger touch; and the full-screen shut-down operation mode means that the whole touch screen is unable to support any touch operation, and Touch IC stops reporting touch information to CPU (Central Processing Unit).

If the interference levels of electrically conductive liquid include a first interference level, a second interference level, a third interference level and a fourth interference level with increasing interference degree (between consecutive levels), the Step may include:
1. It is selected from the predetermined correspondence relation the full-screen multi-finger operation mode if the interference level of the electrically conductive liquid is the first interference level.
   The first interference level has the lowest interference degree. Under the circumstances, the electrically conductive liquid has few or even no impact on touch operation, so Touch IC still can accurately detect single-point touch and multi-point touch by way of mutual capacitance scanning or by way of combination of mutual capacitance scanning and self-capacitance scanning. Therefore, if the interference level of the electrically conductive liquid is the first interference level, Touch IC selects from the predetermined correspondence relation the full-screen multi-finger operation mode so as to guarantee normal detection of users' multi-finger touch.
2. It is selected from the predetermined correspondence relation the multi-finger and single-finger mixed operation mode if the interference level of the electrically conductive liquid is the second interference level.
   Compared with the first interference level, the interference degree of the second interference level is higher. Under the circumstances, the multi-finger and single-finger mixed operation mode is used. For example, when user's fingers are beyond the scope of the electrically conductive liquid, Touch IC still can accurately detect single-point touch and multi-point touch by way of mutual capacitance scanning or by way of combination of mutual capacitance scanning and self-capacitance scanning. When user's fingers are within the scope of the electrically conductive liquid, change of the self-capacitance value caused by finger touch can be stably monitored by Touch IC, but change of mutual capacitance value caused by finger touch is difficult to be stably monitored by Touch IC because it is significantly affected by electrically conductive liquid. Therefore, Touch IC can make normal detection of users' single-finger touch by way of self-capacitance scanning so as to guarantee normal detection of single-finger operation such as clicking, sliding and the like.
3. It is selected from the predetermined correspondence relation the full-screen single-finger operation mode if the interference level of the electrically conductive liquid is the third interference level.
   Compared with the second interference level, the interference degree of the third interference level is higher. Under the circumstances, the full-screen single-finger operation mode is used so that Touch IC can make a detection of users' single-finger touch by way of self-capacitance scanning so as to guarantee the detection accuracy of single-finger operation such as clicking, sliding and the like.
4. It is selected from the predetermined correspondence relation the full-screen shut-down operation mode if the interference level of the electrically conductive liquid is the fourth interference level.

The fourth interference level has the highest interference degree. Under the circumstances, the electrically conductive liquid may seriously affect single-finger touch and multi-finger touch. Touch IC selects the full-screen shut-down operation mode and stops reporting touch information to CPU in order to prevent Touch IC from reporting wrong touch information to CPU in case of detection of the wrong touch information thus causing CPU to carry out misoperation on the basis of the wrong touch information.

Secondly, the touch screen is controlled under the operation mode selected.

The touch screen is controlled under the operation mode selected after Touch IC selects the operation mode corresponding to the interference level from the predetermined correspondence relation.

In the following, control and handling of touch operation conducted by electronic equipment will be introduced when the touch screen is under the multi-finger and single-finger mixed operation mode:

In Step 204, the touch screen is controlled under the multi-finger operation mode when the touch screen is under the multi-finger and single-finger mixed operation mode.

Under the multi-finger and single-finger mixed operation mode, Touch IC firstly controls the touch screen under the multi-finger operation mode, and the multi-finger operation mode supports users' multi-finger touch operation.

In Step 205, the touch position corresponding to at least one finger by way of mutual capacitance scanning is acquired.

Under the multi-finger operation mode, normal detection of the multi-finger touch operation and single-finger touch operation can be conducted by way of mutual capacitance scanning or by way of combination of mutual capacitance scanning and self-capacitance scanning, and the touch position corresponding to each finger can be acquired.

In Step 206, it is detected whether any touch position enters within the scope of the electrically conductive liquid.

Wherein, the scope of the electrically conductive liquid is determined according to the actual coverage scope of the electrically conductive liquid on the touch screen surface, and the area of the scope of the electrically conductive liquid is larger than that of the actual coverage scope. Prejudgment of finger touch of the electrically conductive liquid can be guaranteed if the area of the scope of the electrically conductive liquid is appropriately larger than that of the actual coverage scope so as to continuously and accurately acquire the touch position corresponding to the finger in the subsequent process.

In Step 207, the touch screen is controlled for switching from the multi-finger operation mode to the single-finger operation mode if any touch position enters within the scope of the electrically conductive liquid.

The single-finger operation mode supports users' single-finger touch operation. Under the single-finger operation mode, normal detection of the single-finger touch operation can be conducted by way of self-capacitance scanning.

In Step 208, it is continued to acquire at least one associated touch position corresponding to the touch position entering within the scope of the electrically conductive liquid by way of self-capacitance scanning.

In the present embodiment, the finger entering within the scope of the electrically conductive liquid is identified as the user's finger which is conducting the touch operation. Accurate response to user's touch operation can be guaranteed to a large extent via continuous detection of the touch position corresponding to the finger by way of self-capacitance scanning.

In conclusion, the touch screen control method provided by the embodiment is characterized by: identifying the interference level of the electrically conductive liquid by acquiring actual capacitance values of test points on the touch screen according to a change of the actual capacitance value relative to the reference capacitance value, and controlling the touch screen under the operation mode corresponding to the interference level; solving the problem that electrically conductive liquid covering on the capacitive touch screen surface seriously impacts the sensitivity and detection precision of the capacitive touch screen; and controlling the touch screen under the operation mode corresponding to the interference level according to the interference level of the electrically conductive liquid, to a large extent mitigating the effect of the electrically conductive liquid on the touch screen, and improving the sensitivity and detection precision of the touch screen.

In addition, the touch screen control method provided by the embodiment is characterized by: dividing the electrically conductive liquids into different interference levels according to different interference degrees of different electrically conductive liquids, providing different control strategies in allusion to different interference levels, and furthest mitigating effect of the electrically conductive liquids on the touch screen. When the interference degree is lower, normal detection of users' multi-finger touch can be guaranteed; when the interference degree is higher, accurate detection of single-finger operation such as clicking, sliding and the like shall be given a priority; and when the interference degree is very high, touch information is stopped reporting to CPU so as to prevent CPU from receiving wrong touch information and thus completing misoperation.

It should be explained that after the foregoing Step 203 is completed, Touch IC also reports the current operation mode of the touch screen to CPU of electronic equipment, and the CPU is used for generating prompt message. The prompt message is used for prompting the current operation mode of the touch screen so that users can know the current operation mode of the touch screen according to the prompt message. Also, users can know whether there is electrically conductive liquid on the touch screen surface according to the prompt message, thus timely removing the electrically conductive liquid so as to avoid impacting users' normal touch operation.

The following is the embodiment of the device in the present invention, which can be used for executing the embodiment of the method in the present invention. Please refer to the embodiment of the method in the present invention with regard to undisclosed details about the embodiment of the device in the present invention.

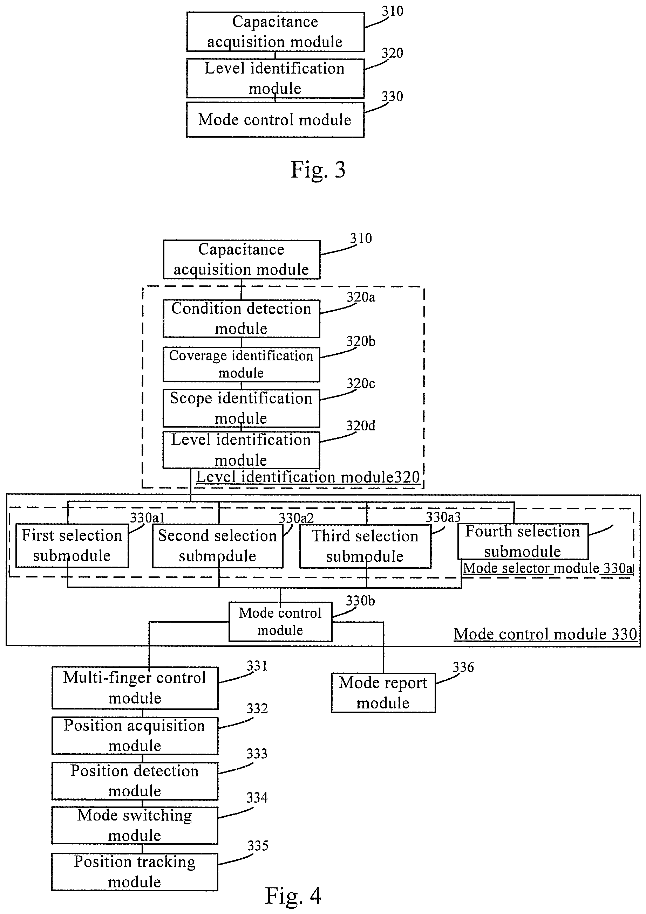

Fig. 3 is a block diagram of a touch screen control device according to an exemplary embodiment. The touch screen control device can be implemented by software and hardware or combination of both to be a part or all of the electronic equipment. The touch screen control device may include: a capacitance acquisition module 310, a level identification module 320 and a mode control module 330.

The capacitance acquisition module 310 is configured for acquiring actual capacitance values of respective test points on the touch screen.

The level identification module 320 is configured for identifying the interference level of the electrically conductive liquid according to a change of the actual capacitance values relative to reference capacitance values, the reference capacitance values referring to the capacitance values when the test points are not influenced by an electrically conductive liquid.

The mode control module 330 is configured for controlling the touch screen under the operation mode corresponding to the interference level.

In conclusion, the touch screen control device according to the embodiment is characterized by: identifying the interference level of the electrically conductive liquid by acquiring actual capacitance values of test points on the touch screen according to change of the actual capacitance value relative to the reference capacitance value, and controlling the touch screen under the operation mode corresponding to the interference level; solving the problem of electrically conductive liquids covering the capacitive touch screen surface seriously impacting the sensitivity and detection precision of the capacitive touch screen; controlling the touch screen under the operation mode corresponding to the interference level according to the interference level of the electrically conductive liquids, to a large extent mitigating the impact of electrically conductive liquids on the touch screen, and improving the sensitivity and detection precision of the touch screen.

Fig. 4 is a block diagram of a touch screen control device according to another exemplary embodiment. The touch screen control device can realized by software and hardware or combination of both to be a part or all of the electronic equipment. The touch screen control device may include: a capacitance acquisition module 310, a level identification module 320 and a mode control module 330.

The capacitance acquisition module 310 is configured for acquiring actual capacitance values of respective test points on the touch screen.

The level identification module 320 is configured for identifying the interference level of the electrically conductive liquid according to a change of the actual capacitance values relative to reference capacitance values, the reference capacitance values referring to the capacitance values when the test points are not influenced by an electrically conductive liquid.

The level identification module 320 includes: a condition detection module 320a, a coverage identification module 320b, a scope identification module 320c and a level identification module 320d.

The condition detection module 320a is configured for detecting whether each of the test points meets a predetermined condition. The predetermined condition includes: the actual self-capacitance value of the test point is the same as the reference self-capacitance value, and the actual mutual capacitance value of the test point is different from the reference mutual capacitance value; wherein, the reference self-capacitance value refers to the self-capacitance value when the test point is not influenced by the electrically conductive liquid, and the reference mutual capacitance value refers to the mutual capacitance value when the test point is not influenced by the electrically conductive liquid.

The coverage identification module 320b is configured for identifying that the test point surface is covered with the electrically conductive liquid if the test point meets the predetermined condition, and according to the difference value between the actual mutual capacitance value and the reference mutual capacitance value, for identifying the coverage quantity of the electrically conductive liquid, the difference value being in positive correlation relationship with the coverage quantity.

The scope identification module 320c is configured for identifying the actual coverage scope and coverage quantity of the electrically conductive liquid on the touch screen surface according to the fact whether the surface of each test point is covered with the electrically conductive liquid and to the coverage quantity of the electrically conductive liquid.

The level identification module 320d is configured for identifying the interference level of the electrically conductive liquid according to the actual coverage scope and coverage quantity of the electrically conductive liquid on the touch screen surface.

The mode control module 330 is configured for controlling the touch screen under the operation mode corresponding to the interference level.

The mode control module 330 includes a mode selection module 330a and a mode control module 330b.

The mode selection module 330a is configured for selecting from the predetermined correspondence relation the operation mode corresponding to the interference level. The predetermined correspondence relation includes the correspondence relation between interference levels and operation modes, and the operation modes include at least one of a full-screen multi-finger operation mode, a multi-finger and single-finger mixed operation mode, a full-screen single-finger operation mode and a full-screen shut-down operation mode.

The mode selection module 330a includes: a first selection submodule 330a1; or, a second selection submodule 330a2; or a third selection submodule 330a3; or, a fourth selection submodule 330a4.

The interference level includes a first interference level, a second interference level, a third interference level and a fourth interference level with increasing interference degree,

The first selection submodule 330a1 is configured for selecting from the predetermined correspondence relation the full-screen multi-finger operation mode if the interference level of the electrically conductive liquid is the first interference level;

The second selection submodule 330a2 is configured for selecting from the predetermined correspondence relation the multi-finger and single-finger mixed operation mode if the interference level of the electrically conductive liquid is the second interference level;

The third selection submodule 330a3 is configured for selecting from the predetermined correspondence relation the full-screen single-finger operation mode if the interference level of the electrically conductive liquid is the third interference level;

The fourth selection submodule 330a4 is configured for selecting from the predetermined correspondence relation the full-screen shut-down operation mode if the interference level of the electrically conductive liquid is the fourth interference level.

The mode control module 330b is configured for controlling the touch screen under the operation mode selected.

Optionally, the device also includes: a multi-finger control module 331, a position acquisition module 332, a position detection module 333, a mode switching module 334 and a position tracking module 335.

The multi-finger control module 331 is configured for controlling the touch screen under the multi-finger operation mode when the touch screen is under the multi-finger and single-finger mixed operation mode.

The position acquisition module 332 is configured for acquiring the touch position corresponding to at least one finger by way of mutual capacitance scanning.

The position detection module 333 is configured for detecting whether any touch position enters within the scope of the electrically conductive liquid, the scope of the electrically conductive liquid is determined according to the actual coverage scope of the electrically conductive liquid on the touch screen surface, and the area of the scope of the electrically conductive liquid is larger than that of the actual coverage scope.

The mode switching module 334 is configured for controlling the touch screen for switching from the multi-finger operation mode to the single-finger operation mode if any touch position enters within the scope of the electrically conductive liquid.

The position tracking module 335 is configured for continuing acquiring at least one associated touch position corresponding to the touch position entering within the scope of the electrically conductive liquid by way of self-capacitance scanning.

Optionally, the device also includes: a mode report module 336.

The mode report module 336 is configured for reporting the current operation mode of the touch screen to CPU, and the CPU is used for generating prompt message which is used for prompting the current operation mode of the touch screen.

In conclusion, the touch screen control device according to the embodiment is characterized by: identifying the interference level of the electrically conductive liquid via acquiring actual capacitance values of test points on the touch screen according to a change of the actual capacitance values relative to the reference capacitance values, and controlling the touch screen under the operation mode corresponding to the interference level. The problem of electrically conductive liquids covering the capacitive touch screen surface seriously impacting the sensitivity and detection precision of the capacitive touch screen is solved. Controling the touch screen under the operation mode corresponding to the interference level according to the interference level of the electrically conductive liquids may, to a large extent, mitigate the impact of electrically conductive liquids on the touch screen, thus improving the sensitivity and detection precision of the touch screen.

In addition, the touch screen control device provided by the embodiment is characterized by: dividing the electrically conductive liquids into different interference levels according to different interference degrees of different electrically conductive liquids, providing different control strategies with respect to different interference levels, and maximumly mitigating the effect of the electrically conductive liquids on the touch screen. When the interference degree is lower, normal detection of users' multi-finger touch can be guaranteed; when the interference degree is higher, accurate detection of single-finger operation such as clicking, sliding and the like shall be given a priority; and when the interference degree is very high, touch information is stopped reporting to CPU so as to prevent CPU from receiving wrong touch information and carrying out misoperation.

With regard to the device in the above embodiment, detailed description of specific modes for executing operation of modules has been made in the embodiment of the method, so no detailed illustration will be made herein.

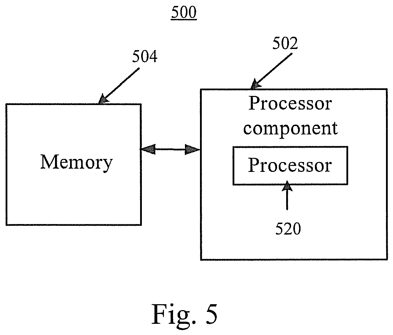

Fig. 5 is a block diagram of a device 500 for controlling the touch screen according to an exemplary embodiment. For example, the device 500 may be a Touch IC.

Referring to Fig. 5, the device 500 may include one or a plurality of modules: a processor component 502 and a memory 504.

The processor component 502 usually controls the overall operation of the device 500, for example, acquiring the capacitance values of test points on the touch screen of electronic equipment, controlling the operation mode of the touch screen, and reporting information to CPU of electronic equipment, etc. The processor component 502 may include one or a plurality of processors 520 for executing instructions so as to carry out steps of above method in part or in whole. In addition, the processor component 502 may include one or a plurality of modules for the convenience of interaction between the processor component 502 and other modules.

The memory 504 is configured for storing data of different types so as to support the operation of the device 500. Examples of the data include any application program or approach directive for operation of the device 500. The memory 504 can be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

In exemplary embodiments, the device 500 can be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, used for executing the touch screen control method as shown in above Fig.1 or Fig.2.

In exemplary embodiments, a non-temporary computer-readable storage medium including instructions is also provided, for example, a memory 504 including instructions, above instructions can be executed by the processors 520 of the device 500 so as to achieve the touch screen control method as shown in Fig.1 or Fig.2. For example, the non-temporary computer-readable storage medium may be ROM, random access memory (RAM), CD-ROM, magnetic tape, floppy disk and optical data storage device, etc.

A non-transitory computer-readable storage medium, wherein instructions in the storage medium are executable by processors of the device 500 so as to execute the touch screen control method as shown in above Fig.1 or Fig.2.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings.

## Claims

1. A touch screen control method, comprising:
acquiring (102) actual capacitance values of respective test points on a touch screen;
identifying (104) an interference level of an electrically conductive medium according to a change of the actual capacitance values relative to reference capacitance values, the reference capacitance values referring to capacitance values when the test points are not influenced by an electrically conductive medium covering the surface of the touch screen;
controlling (106) the touch screen under an operation mode corresponding to the interference level,
wherein controlling the touch screen under the operation mode corresponding to the interference level, comprises:
selecting from a predetermined correspondence relation the operation mode corresponding to the interference level, the predetermined correspondence relation including a correspondence relation between respective interference levels and respective operation modes, and the operation modes including, in order of increasing interference level, a full-screen multi-finger operation mode, a multi-finger and single-finger mixed operation mode, a full-screen single-finger operation mode and a full-screen shut-down operation mode; and
controlling the touch screen under the operation mode selected.

2. The method of claim 1, wherein identifying the interference level of the electrically conductive medium according to the change of the actual capacitance values relative to reference capacitance values comprises:
detecting whether each of the test points meets a predetermined condition, the predetermined condition including: an actual self-capacitance value of the test point is the same as a reference self-capacitance value, and an actual mutual capacitance value of the test point is different from a reference mutual capacitance value; wherein, the reference self-capacitance value refers to a self-capacitance value when the test point is not influenced by the electrically conductive medium, and the reference mutual capacitance value refers to a mutual capacitance value when the test point is not influenced by the electrically conductive medium;
identifying a surface of the test point covered with the electrically conductive medium if the test point meets the predetermined condition, and according to a difference value between the actual mutual capacitance value and the reference mutual capacitance value, identifying a coverage quantity of the electrically conductive medium, the difference value being in a positive correlation relationship with the coverage quantity;
identifying an actual coverage scope and an actual coverage quantity of the electrically conductive medium on a surface of the touch screen according to whether the surface of the each test point is covered with the electrically conductive medium and a coverage quantity of the electrically conductive medium; and
identifying the interference level of the electrically conductive medium according to the actual coverage scope and the actual coverage quantity of the electrically conductive medium on the touch screen surface.

3. The method of claim 1, wherein the interference levels include a first interference level, a second interference level, a third interference level and a fourth interference level with increasing interference degree, and selecting from the predetermined correspondence relation the operation mode corresponding to the interference level comprises:
selecting from the predetermined correspondence relation the full-screen multi-finger operation mode if the interference level of the electrically conductive medium is the first interference level; or,
selecting from the predetermined correspondence relation the multi-finger and single-finger mixed operation mode if the interference level of the electrically conductive medium is the second interference level; or,
selecting from the predetermined correspondence relation the full-screen single-finger operation mode if the interference level of the electrically conductive medium is the third interference level; or,
selecting from the predetermined correspondence relation the full-screen shut-down operation mode if the interference level of the electrically conductive medium is the fourth interference level.

4. The method of claim 1, wherein the method further comprises:
controlling the touch screen under the multi-finger operation mode when the touch screen is under the multi-finger and single-finger mixed operation mode;
acquiring a touch position corresponding to at least one finger by way of mutual capacitance scanning;
detecting whether any touch position enters within a scope of the electrically conductive medium, the scope of the electrically conductive medium being determined according to the actual coverage scope of the electrically conductive medium on the surface of the touch screen, and an area of the scope of the electrically conductive medium being larger than that of the actual coverage scope;
controlling the touch screen to switch from the multi-finger operation mode to the single-finger operation mode if any touch position enters within the scope of the electrically conductive medium; and
continuing to acquire at least one associated touch position corresponding to the touch position entering into the scope of the electrically conductive medium by way of self-capacitance scanning.

5. The method of any of claims 1-4, wherein the method further comprises:
reporting a current operation mode of the touch screen to a CPU of an electronic equipment, the CPU being configured to generate a prompt message to prompt the current operation mode of the touch screen.

6. A touch screen control device, comprising:
a capacitance acquisition module (310), configured to acquire actual capacitance values of respective test points on the touch screen;
a level identification module (320), configured to identify an interference level of an electrically conductive medium according to a change of actual capacitance values relative to reference capacitance values, the reference capacitance values referring to capacitance values when the test points are not influenced by an electrically conductive medium covering the surface of the touch screen;
a mode control module (330), configured to control the touch screen under an operation mode corresponding to the interference level, and
wherein the electrically conductive medium is an electrically conductive medium and the mode control module comprises;
a mode selection module, configured to select from a predetermined correspondence relation the operation mode corresponding to the interference level, the predetermined correspondence relation including a correspondence relation between respective interference levels and respective operation modes, and the operation modes including, in order of increasing interference level, a full-screen multi-finger operation mode, a multi-finger and single-finger mixed operation mode, a full-screen single-finger operation mode and a full-screen shut-down operation mode; and
a mode control module, configured to control the touch screen under the operation mode selected.

7. The device of claim 6, wherein the level identification module comprises:
a condition detection module, configured to detect whether each of the test points meets a predetermined condition; the predetermined condition including: an actual self-capacitance value of the test point is the same as a reference self-capacitance value, and an actual mutual capacitance value of the test point is different from a reference mutual capacitance value; wherein, the reference self-capacitance value refers to a self-capacitance value when the test point is not influenced by the electrically conductive medium, and the reference mutual capacitance value refers to a mutual capacitance value when the test point is not influenced by the electrically conductive medium;
a coverage identification module, configured to identify a surface of the test point covered with the electrically conductive medium if the test point meets the predetermined condition, and identifying a coverage quantity of the electrically conductive medium, the difference value being in a positive correlation relationship with the coverage quantity according to a difference value between the actual mutual capacitance value and the reference mutual capacitance value;
a scope identification module, configured to identify an actual coverage scope and an actual coverage quantity of the electrically conductive medium on a surface of the touch screen according to whether the surface of each test point is covered with the electrically conductive medium and to the coverage quantity of the electrically conductive medium; and
a level identification module, configured to identify the interference level of the electrically conductive medium according to the actual coverage scope and the actual coverage quantity of the electrically conductive medium on the touch screen surface.

8. The device of claim 6, wherein the mode selection module comprises: a first selection subunit; or, a second selection subunit; or a third selection subunit; or, a fourth selection subunit;
the interference levels including a first interference level, a second interference level, a third interference level and a fourth interference level with increasing interference degree,
the first selection submodule is configured to select from the predetermined correspondence relation the full-screen multi-finger operation mode if the interference level of the electrically conductive medium is the first interference level;
the second selection submodule is configured to select from the predetermined correspondence relation the multi-finger and single-finger mixed operation mode if the interference level of the electrically conductive medium is the second interference level;
the third selection submodule is configured to select from the predetermined correspondence relation the full-screen single-finger operation mode if the interference level of the electrically conductive medium is the third interference level; and
the fourth selection submodule is configured to select from the predetermined correspondence relation the full-screen shut-down operation mode if the interference level of the electrically conductive medium is the fourth interference level.

9. The device of claim 6, wherein the device further comprises:
a multi-finger control module, configured to control the touch screen under the multi-finger operation mode when the touch screen is under the multi-finger and single-finger mixed operation mode;
a position acquisition module, configured to acquire a touch position corresponding to at least one finger by way of mutual capacitance scanning;
a position detection module, configured to detect whether any touch position enters within a scope of the electrically conductive medium, the scope of the electrically conductive medium being determined according to the actual coverage scope of the electrically conductive medium on the surface of the touch screen, and an area of the scope of the electrically conductive medium being larger than that of the actual coverage scope;
a mode switching module, configured to control the touch screen to switch from the multi-finger operation mode to the single-finger operation mode if any touch position enters within the scope of the electrically conductive medium; and
a position tracking module, configured to continue to acquire at least one associated touch position corresponding to the touch position entering into the scope of the electrically conductive medium by way of self-capacitance scanning.

10. The device of any of claims 6-9, wherein the device further comprises:
a mode report module, configured to report a current operation mode of the touch screen to a CPU of an electronic equipment, the CPU being configured to generate a prompt message to prompt the current operation mode of the touch screen.

11. A computer program including instructions for executing the steps of a method according to any one of claims 1 to 5 when said program is executed on a processor.

12. A recording medium readable by a computer and having recorded thereon a computer program including instructions for executing the steps of a method according to any one of claims 1 to 5.

## Patentansprüche

1. Berührungsbildschirmsteuerungsverfahren, umfassend:
Erfassen (102) aktueller Kapazitätswerte von jeweiligen Testpunkten auf einem Berührungsbildschirm,
Identifizieren (104) eines Interferenzpegels eines elektrisch leitfähigen Mediums gemäß einer Änderung der aktuellen Kapazitätswerte relativ zu Referenzkapazitätswerten, wobei sich die Referenzkapazitätswerte auf Kapazitätswerte, wenn die Testpunkte nicht durch ein elektrisch leitfähiges Medium beeinflusst werden, das die Oberfläche des Berührungsbildschirms bedeckt, beziehen,
Steuern (106) des Berührungsbildschirms in einem Betriebsmodus, der dem Interferenzpegel entspricht,
wobei das Steuern des Berührungsbildschirms in dem Betriebsmodus, der dem Interferenzpegel entspricht, umfasst:
Auswählen des Betriebsmodus, der dem Interferenzpegel entspricht, aus einer vorbestimmten Korrespondenzrelation, wobei die vorbestimmte Korrespondenzrelation eine Korrespondenzrelation zwischen jeweiligen Interferenzpegeln und jeweiligen Betriebsmodi umfasst, und die Betriebsmodi in der Reihenfolge eines zunehmenden Interferenzpegels einen Vollbildschirm-Mehrfinger-Betriebsmodus, einen gemischten Mehrfinger- und Einfinger-Betriebsmodus, einen Vollbildschirm-Einfinger-Betriebsmodus, und einen Vollbildschirm-Herunterfahr-Betriebsmodus aufweisen, und
Steuern des Berührungsbildschirms in dem ausgewählten Betriebsmodus.

2. Verfahren nach Anspruch 1, wobei das Identifizieren des Interferenzpegels des elektrisch leitfähigen Mediums gemäß der Änderung der aktuellen Kapazitätswerte relativ zu den Referenzkapazitätswerten umfasst:
Erkennen, ob jeder der Testpunkte eine vorbestimmte Bedingung erfüllt, wobei die vorbestimmte Bedingung umfasst: ein aktueller Selbstkapazitätswert des Testpunkts ist gleich einem Referenz-Selbstkapazitätswert, und ein aktueller Gegenkapazitätswert des Testpunkts ist unterschiedlich zu einem Referenz-Gegenkapazitätswert, wobei sich der Referenz-Selbstkapazitätswert auf einen Selbstkapazitätswert, wenn der Testpunkt nicht durch das elektrisch leitfähige Medium beeinflusst wird, bezieht, und sich der Referenz-Gegenkapazitätswert auf einen Gegenkapazitätswert, wenn der Testpunkt nicht durch das elektrisch leitfähige Medium beeinflusst wird, bezieht,
Identifizieren einer Oberfläche des Testpunkts, die mit dem elektrisch leitfähigen Medium bedeckt ist, wenn der Testpunkt die vorbestimmte Bedingung erfüllt, und Identifizieren einer Bedeckungsmenge des elektrisch leitfähigen Mediums gemäß einem Differenzwert zwischen dem aktuellen Gegenkapazitätswert und dem Referenz-Gegenkapazitätswert, wobei der Differenzwert in einer positiven Korrelationsrelation mit der Bedeckungsmenge steht,
Identifizieren einer aktuellen Bedeckungsreichweite und einer tatsächlichen Bedeckungsmenge des elektrisch leitfähigen Mediums auf einer Oberfläche des Berührungsbildschirms in Abhängigkeit davon, ob die Oberfläche jedes Testpunkts mit dem elektrisch leitfähigen Medium bedeckt ist und einer Bedeckungsmenge des elektrisch leitfähigen Mediums, und
Identifizieren des Interferenzpegels des elektrisch leitfähigen Mediums gemäß der aktuellen Bedeckungsreichweite und der tatsächlichen Bedeckungsmenge des elektrisch leitfähigen Mediums auf der Berührungsbildschirmfläche.

3. Verfahren nach Anspruch 1, wobei die Interferenzpegel einen ersten Interferenzpegel, einen zweiten Interferenzpegel, einen dritten Interferenzpegel und einen vierten Interferenzpegel mit zunehmendem Interferenzgrad aufweisen und das Auswählen des Betriebsmodus, der dem Interferenzpegel entspricht, aus der vorbestimmten Korrespondenzrelation, umfasst:
Auswählen des Vollbildschirm-Mehrfinger-Betriebsmodus aus der vorbestimmten Korrespondenzrelation, wenn der Interferenzpegel des elektrisch leitfähigen Mediums der erste Interferenzpegel ist, oder,
Auswählen des gemischten Mehrfinger- und Einfinger-Betriebsmodus aus der vorbestimmten Korrespondenzrelation, wenn der Interferenzpegel des elektrisch leitfähigen Mediums der zweite Interferenzpegel ist, oder,
Auswählen des Vollbildschirm-Einfinger-Betriebsmodus aus der vorbestimmten Korrespondenzrelation, wenn der Interferenzpegel des elektrisch leitfähigen Mediums der dritte Interferenzpegel ist, oder,
Auswählen des Vollbildschirm-Herunterfahr-Betriebsmodus aus der vorbestimmten Korrespondenzrelation, wenn der Interferenzpegel des elektrisch leitfähigen Mediums der vierte Interferenzpegel ist.

4. Verfahren nach Anspruch 1, wobei das Verfahren ferner umfasst:
Steuern des Berührungsbildschirms in dem Mehrfinger-Betriebsmodus, wenn sich der Berührungsbildschirm in dem gemischten Mehrfinger- und Einfinger-Betriebsmodus befindet,
Erfassen einer Berührungsposition, die mindestens einem Finger entspricht, mittels Gegenkapazitätsabtastung,
Erkennen, ob eine Berührungsposition in die Reichweite des elektrisch leitfähigen Mediums eintritt, wobei die Reichweite des elektrisch leitfähigen Mediums gemäß der aktuellen Bedeckungsreichweite des elektrisch leitfähigen Mediums auf der Oberfläche des Berührungsbildschirms bestimmt wird, und ein Bereich der Reichweite des elektrisch leitfähigen Mediums größer als der der aktuellen Bedeckungsreichweite ist,
Steuern des Berührungsbildschirms, von dem Mehrfinger-Betriebsmodus in den Einfinger-Betriebsmodus umzuschalten, wenn eine Berührungsposition in die Reichweite des elektrisch leitfähigen Mediums eintritt, und
Fortfahren, mindestens eine zugeordnete Berührungsposition zu erfassen, die der Berührungsposition entspricht, die in den Bereich des elektrisch leitfähigen Mediums eintritt, durch Selbstkapazitätsabtastung.

5. Verfahren nach einem der Ansprüche 1 bis 4, wobei das Verfahren ferner umfasst:
Melden eines aktuellen Betriebsmodus des Berührungsbildschirms an eine CPU eines elektronischen Geräts, wobei die CPU konfiguriert ist, eine Anzeigenachricht zu erzeugen, um den aktuellen Betriebsmodus des Berührungsbildschirms anzuzeigen.

6. Berührungsbildschirm-Steuervorrichtung, umfassend:
ein Kapazitätserfassungsmodul (310), das konfiguriert ist, aktuelle Kapazitätswerte von jeweiligen Testpunkten auf dem Berührungsbildschirm zu erfassen,
ein Pegelidentifizierungsmodul (320), das konfiguriert ist, einen Interferenzpegel eines elektrisch leitfähigen Mediums gemäß einer Änderung von aktuellen Kapazitätswerten relativ zu Referenzkapazitätswerten zu identifizieren, wobei sich die Referenzkapazitätswerte auf Kapazitätswerte, wenn die Testpunkte nicht durch ein elektrisch leitfähiges Medium, das die Oberfläche des Berührungsbildschirms bedeckt, beeinflusst werden, beziehen,
ein Modussteuerungsmodul (330), das konfiguriert ist, den Berührungsbildschirm in einem Betriebsmodus, der dem Interferenzpegel entspricht, zu steuern, und
wobei das elektrisch leitfähige Medium ein elektrisch leitfähiges Medium ist und das Modussteuerungsmodul umfasst,
ein Modusauswahlmodul, das konfiguriert ist, aus einer vorbestimmten Korrespondenzrelation den Betriebsmodus, der dem Interferenzpegel entspricht, auszuwählen, wobei die vorbestimmte Korrespondenzrelation eine Korrespondenzrelation zwischen jeweiligen Interferenzpegeln und jeweiligen Betriebsmodi aufweist, und die Betriebsmodi, in Reihenfolge zunehmender Interferenzpegel, einen Vollbildschirm-Mehrfinger-Betriebsmodus, einen gemischten Mehrfinger- und Einfinger-Betriebsmodus, einen Vollbildschirm-Einfinger-Betriebsmodus, und einen Vollbildschirm-Herunterfahr-Betriebsmodus aufweisen, und
ein Modussteuerungsmodul, das konfiguriert ist, den Berührungsbildschirm in dem ausgewählten Betriebsmodus zu steuern.

7. Vorrichtung nach Anspruch 6, wobei das Pegelidentifizierungsmodul umfasst:
ein Zustandserfassungsmodul, das konfiguriert ist, zu erfassen, ob jeder der Testpunkte eine vorbestimmte Bedingung erfüllt, wobei die vorbestimmte Bedingung umfasst: ein aktueller Selbstkapazitätswert des Testpunkts ist gleich einem Referenz-Selbstkapazitätswert, und ein aktueller Gegenkapazitätswert des Testpunkts ist unterschiedlich zu einem Referenz-Gegenkapazitätswert, wobei sich der Referenz-Selbstkapazitätswert auf einen Selbstkapazitätswert, wenn der Testpunkt nicht durch das elektrisch leitfähige Medium beeinflusst wird, bezieht und sich der Referenz-Gegenkapazitätswert auf einen Gegenkapazitätswert, wenn der Testpunkt nicht durch das elektrisch leitfähige Medium beeinflusst wird, bezieht,
ein Bedeckungsidentifizierungsmodul, das konfiguriert ist, eine Oberfläche des Testpunkts, die mit dem elektrisch leitfähigen Medium bedeckt ist, zu identifizieren, wenn der Testpunkt die vorbestimmte Bedingung erfüllt, und eine Bedeckungsmenge des elektrisch leitfähigen Mediums zu identifizieren, wobei der Differenzwert in einer positiven Korrelationsrelation mit der Bedeckungsmenge steht, gemäß einem Differenzwert zwischen dem aktuellen Gegenkapazitätswert und dem Referenz-Gegenkapazitätswert,
ein Bereichsidentifizierungsmodul, das konfiguriert ist, eine aktuelle Bedeckungsreichweite und eine aktuelle Bedeckungsmenge des elektrisch leitfähigen Mediums auf einer Oberfläche des Berührungsbildschirms zu identifizieren, in Abhängigkeit davon, ob die Oberfläche jedes Testpunkts mit dem elektrisch leitfähigen Medium bedeckt ist und der Bedeckungsmenge des elektrisch leitfähigen Mediums, und
ein Pegelidentifizierungsmodul, das konfiguriert ist, den Interferenzpegel des elektrisch leitfähigen Mediums gemäß der aktuellen Bedeckungsreichweite und der aktuellen Bedeckungsmenge des elektrisch leitfähigen Mediums auf der Berührungsbildschirmfläche zu identifizieren.

8. Vorrichtung nach Anspruch 6, wobei das Modusauswahlmodul umfasst:
eine erste Auswahluntereinheit, oder eine zweite Auswahluntereinheit, oder eine dritte Auswahluntereinheit, oder eine vierte Auswahluntereinheit,
wobei die Interferenzpegel einen ersten Interferenzpegel, einen zweiten Interferenzpegel, einen dritten Interferenzpegel und einen vierten Interferenzpegel, mit zunehmendem Interferenzgrad, aufweisen,
wobei
das erste Auswahlsubmodul konfiguriert ist, aus der vorbestimmten Korrespondenzrelation den Vollbildschirm-Mehrfinger-Betriebsmodus auszuwählen, wenn der Interferenzpegel des elektrisch leitfähigen Mediums der erste Interferenzpegel ist,
das zweite Auswahlsubmodul konfiguriert ist, aus der vorbestimmten Korrespondenzrelation den gemischten Mehrfinger- und Einfinger-Betriebsmodus auszuwählen, wenn der Interferenzpegel des elektrisch leitfähigen Mediums der zweite Interferenzpegel ist,
das dritte Auswahlsubmodul konfiguriert ist, aus der vorbestimmten Korrespondenzrelation den Vollbildschirm-Einfinger-Betriebsmodus auszuwählen, wenn der Interferenzpegel des elektrisch leitfähigen Mediums der dritte Interferenzpegel ist, und
das vierte Auswahlsubmodul konfiguriert ist, aus der vorbestimmten Korrespondenzrelation den Vollbildschirm-Herunterfahr-Betriebsmodus auszuwählen, wenn der Interferenzpegel des elektrisch leitfähigen Mediums der vierte Interferenzpegel ist.

9. Vorrichtung nach Anspruch 6, wobei die Vorrichtung ferner umfasst:
ein Mehrfinger-Steuerungsmodul, das konfiguriert ist, den Berührungsbildschirm in dem Mehrfinger-Betriebsmodus zu steuern, wenn sich der Berührungsbildschirm in dem gemischten Mehrfinger- und Einfinger-Betriebsmodus befindet,
ein Positionserfassungsmodul, das konfiguriert ist, eine Berührungsposition, die mindestens einem Finger entspricht, mittels Gegenkapazitätsabtastung zu erfassen,
ein Positionserfassungsmodul, das konfiguriert ist, zu erfassen, ob eine Berührungsposition in eine Reichweite des elektrisch leitfähigen Mediums eintritt, wobei die Reichweite des elektrisch leitfähigen Mediums gemäß der aktuellen Bedeckungsreichweite des elektrisch leitfähigen Mediums auf der Oberfläche des Berührungsbildschirms bestimmt wird, und ein Bereich der Reichweite des elektrisch leitfähigen Mediums größer als der der aktuellen Bedeckungsreichweite ist,
ein Modusumschaltmodul, das konfiguriert ist, den Berührungsbildschirm zu steuern, von dem Mehrfinger-Betriebsmodus in den Einfinger-Betriebsmodus umzuschalten, wenn eine Berührungsposition in den Bereich des elektrisch leitfähigen Mediums eintritt, und
ein Positionsverfolgungsmodul, das konfiguriert ist, damit fortzufahren, mindestens eine zugeordnete Berührungsposition, die der Berührungsposition entspricht, die in den Bereich des elektrisch leitfähigen Mediums eintritt, mittels Selbstkapazitätsabtastung zu erfassen.

10. Vorrichtung nach einem der Ansprüche 6 bis 9, wobei die Vorrichtung ferner umfasst:
ein Modusmeldemodul, das konfiguriert ist, einen aktuellen Betriebsmodus des Berührungsbildschirms an eine CPU eines elektronischen Geräts zu melden, wobei die CPU konfiguriert ist, eine Anzeigemeldung zu erzeugen, um den aktuellen Betriebsmodus des Berührungsbildschirms anzuzeigen.

11. Computerprogramm, das Anweisungen zum Ausführen der Schritte eines Verfahrens nach einem der Ansprüche 1 bis 5 beinhaltet, wenn das Programm auf einem Prozessor ausgeführt wird.

12. Aufzeichnungsmedium, das von einem Computer gelesen werden kann und auf dem ein Computerprogramm mit Anweisungen zum Ausführen der Schritte eines Verfahrens nach einem der Ansprüche 1 bis 5 aufgezeichnet ist.

## Revendications

1. Procédé de commande d'écran tactile, comprenant :
l'acquisition (102) des valeurs de capacitance réelles de points de test respectifs sur un écran tactile ;
l'identification (104) d'un niveau d'interférence d'un milieu électriquement conducteur conformément à un changement des valeurs de capacitance réelles par rapport à des valeurs de capacitance de référence, les valeurs de capacitance de référence faisant référence à des valeurs de capacitance lorsque les points de test ne sont pas influencés par un milieu électriquement conducteur recouvrant la surface de l'écran tactile ;
la commande (106) de l'écran tactile dans un mode de fonctionnement correspondant au niveau d'interférence,
dans lequel la commande de l'écran tactile dans le mode de fonctionnement correspondant au niveau d'interférence comprend :
la sélection, à partir d'une relation de correspondance prédéterminée, du mode de fonctionnement correspondant au niveau d'interférence, la relation de correspondance prédéterminée comprenant une relation de correspondance entre des niveaux d'interférence respectifs et des modes de fonctionnement respectifs, et les modes de fonctionnement comprenant, dans l'ordre des niveaux d'interférence croissants, un mode de fonctionnement multi-doigt plein écran, un mode de fonctionnement mixte multi-doigt et simple-doigt, un mode de fonctionnement simple-doigt plein écran et un mode de fonctionnement plein écran bloqué ; et
la commande de l'écran tactile dans le mode de fonctionnement sélectionné.

2. Procédé selon la revendication 1, dans lequel l'identification du niveau d'interférence du milieu électriquement conducteur conformément au changement des valeurs de capacitance réelles par rapport à des valeurs de capacitance de référence comprend :
la détection si chacun des points de test satisfait à une condition prédéterminée, la condition prédéterminée comprenant : une valeur d'auto-capacitance réelle du point de test est identique à une valeur d'auto-capacitance de référence, et une valeur de capacitance mutuelle réelle du point de test est différente d'une valeur de capacitance mutuelle de référence ; dans lequel la valeur d'auto-capacitance de référence fait référence à une valeur d'auto-capacitance lorsque le point de test n'est pas influencé par le milieu électriquement conducteur, et la valeur de capacitance mutuelle de référence fait référence à une valeur de capacitance mutuelle lorsque le point de test n'est pas influencé par le milieu électriquement conducteur ;
l'identification d'une surface du point de test recouverte par le milieu électriquement conducteur si le point de test satisfait à la condition prédéterminée, et, conformément à une valeur de différence entre la valeur de capacitance mutuelle réelle et la valeur de capacitance mutuelle de référence, l'identification d'une quantité de couverture du milieu électriquement conducteur, la valeur de différence étant dans une relation de corrélation positive avec la quantité de couverture ;
l'identification d'une étendue de couverture réelle et d'une quantité de couverture réelle du milieu électriquement conducteur sur une surface de l'écran tactile si la surface de chaque point de test est recouverte par le milieu électriquement conducteur et conformément à une quantité de couverture du milieu électriquement conducteur ; et
l'identification du niveau d'interférence du milieu électriquement conducteur conformément à l'étendue de couverture réelle et à la quantité de couverture réelle du milieu électriquement conducteur sur la surface d'écran tactile.

3. Procédé selon la revendication 1, dans lequel les niveaux d'interférence comprennent un premier niveau d'interférence, un deuxième niveau d'interférence, un troisième niveau d'interférence et un quatrième niveau d'interférence avec des degrés d'interférence croissants, et la sélection, à partir de la relation de correspondance prédéterminée, du mode de fonctionnement correspondant au niveau d'interférence comprend :
la sélection, à partir de la relation de correspondance prédéterminée, du mode de fonctionnement multi-doigt plein écran si le niveau d'interférence du milieu électriquement conducteur est le premier niveau d'interférence ; ou
la sélection, à partir de la relation de correspondance prédéterminée, du mode de fonctionnement mixte multi-doigt et simple-doigt si le niveau d'interférence du milieu électriquement conducteur est le deuxième niveau d'interférence ; ou
la sélection, à partir de la relation de correspondance prédéterminée, du mode de fonctionnement simple-doigt plein écran si le niveau d'interférence du milieu électriquement conducteur est le troisième niveau d'interférence ; ou
la sélection, à partir de la relation de correspondance prédéterminée, du mode de fonctionnement plein écran bloqué si le niveau d'interférence du milieu électriquement conducteur est le quatrième niveau d'interférence.

4. Procédé selon la revendication 1, dans lequel le procédé comprend en outre la commande de l'écran tactile dans le mode de fonctionnement multi-doigt lorsque l'écran tactile est dans le mode de fonctionnement mixte multi-doigt et simple-doigt ;
l'acquisition d'une position de contact correspondant à au moins un doigt au moyen d'un balayage de capacitance mutuelle ;
la détection si une position de contact quelconque entre dans les limites d'une étendue du milieu électriquement conducteur, l'étendue du milieu électriquement conducteur étant déterminée conformément à l'étendue de couverture réelle du milieu électriquement conducteur sur la surface de l'écran tactile, et une aire de l'étendue du milieu électriquement conducteur étant plus grande que celle de l'étendue de couverture réelle ;
la commande de l'écran tactile pour commuter du mode de fonctionnement multi-doigt vers le mode de fonctionnement simple-doigt si une position de contact quelconque entre dans les limites de l'étendue du milieu électriquement conducteur ; et
la poursuite de l'acquisition d'au moins une position de contact associée correspondant à la position de contact entrant dans l'étendue du milieu électriquement conducteur au moyen d'un balayage d'auto-capacitance.

5. Procédé selon l'une quelconque des revendications 1 à 4, dans lequel le procédé comprend en outre :
le rapport d'un mode de fonctionnement actuel de l'écran tactile à une CPU d'un équipement électronique, la CPU étant configurée pour générer un message de demande pour demander le mode de fonctionnement actuel de l'écran tactile.

6. Dispositif de commande d'écran tactile, comprenant :
un module d'acquisition de capacitance (310), configuré pour acquérir les valeurs de capacitance réelles de points de test respectifs sur l'écran tactile ;
un module d'identification de niveau (320), configuré pour identifier un niveau d'interférence d'un milieu électriquement conducteur conformément à un changement des valeurs de capacitance réelles par rapport à des valeurs de capacitance de référence, les valeurs de capacitance de référence faisant référence à des valeurs de capacitance lorsque les points de test ne sont pas influencés par un milieu électriquement conducteur recouvrant la surface de l'écran tactile ;
un module de commande de mode (330), configuré pour commander l'écran tactile dans un mode de fonctionnement correspondant au niveau d'interférence, et
dans lequel le milieu électriquement conducteur est un milieu électriquement conducteur et le module de commande de mode comprend :
un module de sélection de mode, configuré pour sélectionner, à partir d'une relation de correspondance prédéterminée, le mode de fonctionnement correspondant au niveau d'interférence, la relation de correspondance prédéterminée comprenant une relation de correspondance entre des niveaux d'interférence respectifs et des modes de fonctionnement respectifs, et les modes de fonctionnement comprenant, dans l'ordre des niveaux d'interférence croissants, un mode de fonctionnement multi-doigt plein écran, un mode de fonctionnement mixte multi-doigt et simple-doigt, un mode de fonctionnement simple-doigt plein écran et un mode de fonctionnement plein écran bloqué ; et
un module de commande de mode, configuré pour commander l'écran tactile dans le mode de fonctionnement sélectionné.

7. Dispositif selon la revendication 6, dans lequel le module d'identification de niveau comprend :
un module de détection de condition, configuré pour détecter si chacun des points de test satisfait à une condition prédéterminée ; la condition prédéterminée comprenant : une valeur d'auto- capacitance réelle du point de test est identique à une valeur d'auto-capacitance de référence, et une valeur de capacitance mutuelle réelle du point de test est différente d'une valeur de capacitance mutuelle de référence ; dans lequel la valeur d'auto-capacitance de référence fait référence à une valeur d'auto-capacitance lorsque le point de test n'est pas influencé par le milieu électriquement conducteur, et la valeur de capacitance mutuelle de référence fait référence à une valeur de capacitance mutuelle lorsque le point de test n'est pas influencé par le milieu électriquement conducteur ;
un module d'identification de couverture, configuré pour identifier une surface du point de test recouverte par le milieu électriquement conducteur si le point de test satisfait à la condition prédéterminée, et identifier une quantité de couverture du milieu électriquement conducteur, la valeur de différence étant dans une relation de corrélation positive avec la quantité de couverture conformément à une valeur de différence entre la valeur de capacitance mutuelle réelle et la valeur de capacitance mutuelle de référence ;
un module d'identification d'étendue, configuré pour identifier une étendue de couverture réelle et une quantité de couverture réelle du milieu électriquement conducteur sur une surface de l'écran tactile si la surface de chaque point de test est recouverte par le milieu électriquement conducteur et conformément à la quantité de couverture du milieu électriquement conducteur ; et
un module d'identification de niveau, configuré pour identifier le niveau d'interférence du milieu électriquement conducteur conformément à l'étendue de couverture réelle et à la quantité de couverture réelle du milieu électriquement conducteur sur la surface d'écran tactile.

8. Dispositif selon la revendication 6, dans lequel le module de sélection de mode comprend : une première sous-unité de sélection ; ou une deuxième sous-unité de sélection ; ou une troisième sous-unité de sélection ; ou une quatrième sous-unité de sélection ;
les niveaux d'interférence comprenant un premier niveau d'interférence, un deuxième niveau d'interférence, un troisième niveau d'interférence et un quatrième niveau d'interférence avec des degrés d'interférence croissants,
le premier sous-module de sélection est configuré pour sélectionner, à partir de la relation de correspondance prédéterminée, le mode de fonctionnement multi-doigt plein écran si le niveau d'interférence du milieu électriquement conducteur est le premier niveau d'interférence ;
le deuxième sous-module de sélection est configuré pour sélectionner, à partir de la relation de correspondance prédéterminée, le mode de fonctionnement mixte multi-doigt et simple-doigt si le niveau d'interférence du milieu électriquement conducteur est le deuxième niveau d'interférence ;
le troisième sous-module de sélection est configuré pour sélectionner, à partir de la relation de correspondance prédéterminée, le mode de fonctionnement simple-doigt plein écran si le niveau d'interférence du milieu électriquement conducteur est le troisième niveau d'interférence ; et
le quatrième sous-module de sélection est configuré pour sélectionner, à partir de la relation de correspondance prédéterminée, le mode de fonctionnement plein écran bloqué si le niveau d'interférence du milieu électriquement conducteur est le quatrième niveau d'interférence.

9. Dispositif selon la revendication 6, dans lequel le dispositif comprend en outre :
un module de commande multi-doigt, configuré pour commander l'écran tactile dans le mode de fonctionnement multi-doigt lorsque l'écran tactile est dans le mode de fonctionnement mixte multi-doigt et simple-doigt ;
un module d'acquisition de position, configuré pour acquérir une position de contact correspondant à au moins un doigt au moyen d'un balayage de capacitance mutuelle ;
un module de détection de position, configuré pour détecter si une position de contact quelconque entre dans les limites d'une étendue du milieu électriquement conducteur, l'étendue du milieu électriquement conducteur étant déterminée conformément à l'étendue de couverture réelle du milieu électriquement conducteur sur la surface de l'écran tactile, et une aire de l'étendue du milieu électriquement conducteur étant plus grande que celle de l'étendue de couverture réelle ;
un module de commutation de mode, configuré pour commander l'écran tactile pour commuter du mode de fonctionnement multi-doigt vers le mode de fonctionnement simple-doigt si une position de contact quelconque entre dans les limites de l'étendue du milieu électriquement conducteur ; et
un module de suivi de position, configuré pour continuer d'acquérir au moins une position de contact associée correspondant à la position de contact entrant dans l'étendue du milieu électriquement conducteur au moyen d'un balayage d'auto-capacitance.

10. Dispositif selon l'une quelconque des revendications 6 à 9, dans lequel le dispositif comprend en outre :
un module de rapport de mode, configuré pour rapporter un mode de fonctionnement actuel de l'écran tactile à une CPU d'un équipement électronique, la CPU étant configurée pour générer un message de demande pour demander le mode de fonctionnement actuel de l'écran tactile.

11. Programme d'ordinateur comprenant des instructions pour exécuter les étapes d'un procédé selon l'une quelconque des revendications 1 à 5 lorsque ledit programme est exécuté sur un processeur.

12. Support d'enregistrement pouvant être lu par un ordinateur et sur lequel est enregistré un programme d'ordinateur comprenant des instructions pour exécuter les étapes d'un procédé selon l'une quelconque des revendications 1 à 5.
